(19) Europäisches Patentamt

European Patent Office

Office européen des brevets

(11) **EP 1 475 523 B1**

(12) **FASCICULE DE BREVET EUROPEEN**

(45) Date de publication et mention
de la délivrance du brevet:
**16.08.2006 Bulletin 2006/33**

(51) Int Cl.:
*F01N 9/00* *(2006.01)* *F01N 3/023* *(2006.01)*

(21) Numéro de dépôt: **04300263.3**

(22) Date de dépôt: **07.05.2004**

(54) **Procédé et dispositif de détermination de la quantité de particules présente dans un média filtrant d'un système d'échappement d'un moteur thermique**

Verfahren und Vorrichtung zur Bestimmung der Menge an vorhandenen Partikeln in einem Filtermittel im Abgasstrang eines Verbrennungsmotors

Method and device for determining the amount of particles present in a filter means in the exhaust system of an combustion engine

(84) Etats contractants désignés:
**BE DE ES FR GB IT**

(30) Priorité: **07.05.2003 FR 0305578**

(43) Date de publication de la demande:
**10.11.2004 Bulletin 2004/46**

(73) Titulaire: **Renault s.a.s.**
**92100 Boulogne Billancourt (FR)**

(72) Inventeurs:
• **Radenac, Erwan**
**91120 Palaiseau (FR)**

• **Da Silva, Manuel**
**91590 La Ferte Alais (FR)**
• **Moral, Najat**
**91240 Saint Michel sur Orge (FR)**

(56) Documents cités:
EP-A- 1 209 333        EP-A- 1 281 843
EP-A- 1 296 032        EP-A- 1 333 165
FR-A- 2 774 421        US-B1- 6 377 171

• **PATENT ABSTRACTS OF JAPAN vol. 009, no. 174 (P-374), 19 juillet 1985 (1985-07-19) & JP 60 047937 A (MITSUBISHI JIDOSHA KOGYO KK), 15 mars 1985 (1985-03-15)**

**Description**

L'invention concerne le domaine des moteurs thermiques, notamment pour véhicules automobiles, et plus particulièrement un procédé et dispositif pour déterminer la quantité de particules, typiquement de la suie, présente dans un média filtrant du système d'échappement des gaz de combustion du moteur. Selon les modes de réalisation optionnels, l'invention peut constituer un outil de diagnostic de la masse de suie régénérée dans le média filtrant, qu'il soit catalysé ou non, et/ou de déclenchement de la régénération, et/ou de contrôle de l'intégrité du média filtrant.

L'hétérogénéité des processus de combustion dans les moteurs fonctionnant en mélange pauvre a pour effet de générer des particules de carbone, qui ne peuvent être brûlées efficacement dans le moteur. Cela se traduit par l'apparition à l'échappement de fumées noires, caractéristiques de ce type de motorisation. Elles sont particulièrement marquées lors des phases de démarrage et lors de fortes accélérations. Le respect des futures normes législatives impose aux constructeurs la mise en oeuvre de systèmes de dépollution permettant d'éliminer les particules en totalité ce phénomène.

L'état de la technique consiste en la disposition dans la ligne d'échappement d'un élément semi-poreux permettant le passage des composés gazeux, tout en retenant des composés particulaires, dont les fumées Diesel constituent l'élément de base dans la matrice des gaz d'échappement Diesel. Cet élément ou un élément analogue sera désigné média filtrant.

La phase de rétention des particules doit impérativement être suivi d'une seconde étape, appelée phase de régénération, qui élimine ces composés retenus en éléments non polluants (dioxyde de carbone et eau), et permet de reprendre une phase successive d'accumulation des composés particulaires.

Les moyens utilisés pour atteindre les conditions de régénération passent par la création d'un environnement gazeux, chauffé à une température d'environ 600°C. Cette opération permet d'apporter l'énergie nécessaire à l'auto-inflammation des particules de carbone retenues dans le filtre que constitue le média filtrant.

Ces dernières se consument alors en dégageant de l'énergie qui, en fonction des conditions, peut être pondéralement transmise au lit de suies, aux divers éléments constitutifs du système de dépollution (filtre à particules, boite et enveloppe de maintien, tuyaux etc...) ou bien véhiculée par le flux de gaz émanant du moteur.

Il est donc utile de connaître la masse de suie contenue dans le média filtrant, et plus spécifiquement en début et en fin de régénération, de manière à l'intégrer dans des stratégies de détection de masse de suie, de contrôle de l'intégrité de l'élément filtrant ou de toute autre stratégie permettant d'optimiser le déroulement de la régénération du filtre à particule.

Parmi les moyens utilisés pour la détection de la quantité de suie chargée dans le média filtrant, on peut citer la mesure de la perte de charge générée par le média filtrant à l'aide d'un capteur de pression placé en amont du média filtrant, telle que décrite dans le document brevet JP-A-60067713, ou par l'utilisation de deux capteurs respectivement placés en amont et en aval du média filtrant, telle que décrite dans les documents brevets EP-A-1172537 JP-A-60047937 et FR-A-2801636.

Ces différentes méthodes permettent de déclencher ou d'arrêter la régénération dès que la pression mesurée devient supérieure ou inférieure à une valeur seuil, mais ne donnent généralement pas directement accès à la charge de particules, notamment la masse de particules, contenue dans le média filtrant.

L'état de l'art selon le document brevet FR-A-2 804 173 évoque par ailleurs l'utilisation des émissions de base cumulées du moteur pour la détermination de la masse de suie chargée dans le média filtrant et donc le déclenchement d'une régénération.

Dans l'ensemble, ces techniques se limitent à une lecture de la contre-pression qui, pour un point de fonctionnent moteur donné, permet d'évaluer la masse de suie contenue dans le média filtrant. Cette corrélation, loin d'être triviale dans des conditions stabilisées, peut devenir encore plus complexe dans le cas de fonctionnements transitoires, dans la mesure où la corrélation entre la contre-pression générée par le média filtrant et le débit volumique de gaz d'échappement fait intervenir un nombre importants de paramètres physiques. A ce titre, on peut notamment citer la température, la composition des gaz d'échappement, la masse de suie contenue dans le média filtrant, la quantité de résidus, etc.

Au vu de ce qui précède, l'invention propose, selon un premier objet, un procédé de détermination de la charge de particules filtrées présente dans un média filtrant, celui-ci pouvant être imprégné ou non, d'un système d'échappement d'un moteur thermique, caractérisé en ce qu'il comprend les étapes de :

- établir préalablement une relation entre la perméabilité $K(m)$ du média filtrant et la charge, notamment la masse m, de particules contenue dans le média filtrant,
- stocker la relation dans une mémoire accessible lors de la détermination de la charge de particules,
- calculer, à partir des valeurs déterminées, la valeur de la perméabilité $K(m)$ du média filtrant, et
- déterminer la différence $\Delta P_{\text{média filtrant}}$ des pressions en entrée et en sortie du média filtrant, qui est assimilé à la somme de deux composants, dont la première représente la perte de charge générée par l'écoulement des gaz à l'entrée et à la sortie du média filtrant, et la seconde représente la perte de charge générée par les gaz d'échappement à la traversée du média filtrant et contenant la perméabilité K(m) comme variable,
- determiner le débit de gaz traversant ledit média filtrant,
- utiliser cette valeur de perméabilité K(m) dans la relation stockée en mémoire pour déterminer la valeur de la charge de particules présente dans le média filtrant.

Avantageusement, la valeur déterminée du débit des gaz traversant le média filtrant correspond au débit volumique Qv ; ce débit est alors calculé à partir de valeurs mesurées : du débit massique Qm des gaz traversant le média filtrant, de la température T en entrée ou en sortie du média filtrant, et de la pression P en entrée ou en sortie du média filtrant.

Avantageusement, la relation entre la perméabilité K(m) du média filtrant et la charge contenue dans le média filtrant est exprimée sous une forme indépendante des conditions de régénération du média filtrant, notamment une forme indépendante de la pression absolue P en entrée ou en sortie du média filtrant et de la température T en entrée ou en sortie du média filtrant.

Dans le mode de réalisation, la relation entre la perméabilité K(m) du média filtrant et la charge de particules contenue dans le média filtrant est exprimée en prenant pour seuls variables : i) la différence $\Delta P_{média\ filtrant}$ des pressions en amont et en aval du média filtrant, et ii) une valeur de débit de gaz (24, 26) traversant le média filtrant.

De préférence, la détermination de débit de gaz comprend la détermination du débit volumique Qv des gaz d'échappement et la détermination du débit massique Qm des gaz d'échappement.

Pour le calcul de la valeur de la perméabilité K(m), on peut considérer que la différence des pressions $\Delta P_{média\ filtrant}$ est liée au flux des gaz d'échappement par une fonction polynomiale d'ordre deux ayant comme variable le flux volumique Qv des gaz d'échappement, où le terme linéaire de la variable Qv a comme coefficient la perméabilité K(m).

De préférence, le calcul de la valeur est réalisé sur la base de la relation :

$$\Delta P_{CSF} = A\rho Q_v^2 + K(m)Q_v = AQ_vQ_m + K(m)Q_v$$

d'où:

$$\frac{\Delta P_{CSF}}{Q_v} = AQ_m + K(m)$$

où :

$\Delta P_{CSF}$ est la différence de pression en entrée et en sortie du média filtrant (10),
$\rho$ est la densité du gaz d'échappement,
Qv est le flux volumique du gaz d'échappement traversant le média filtrant,
Qm est le flux massique du gaz d'échappement traversant le média filtrant, et
A est une constante.

La relation stockée en mémoire entre perméabilité K(m) du média filtrant et la charge de particules contenue dans le média filtrant peut être sous forme de fonction affine.

La relation stockée en mémoire entre perméabilité K(m) du média filtrant et la charge de particules contenue dans ledit média filtrant peut être sous la forme :

$$K(m) = Bm(t) + C,$$

où B est une constante empirique et C représente la perméabilité du média filtrant sans charge de particules.

Le procédé peut comprendre en outre un diagnostic de l'état du média filtrant, ce diagnostic comprenant les étapes de :

- stocker en mémoire la valeur de la perméabilité sans charge de particules C du média filtrant (10) lorsque dépourvu de charge de particules,
- comparer cette valeur de perméabilité sans charge de particules C avec une valeur calculée à partir de la valeur

de la différence $\Delta P_{\text{média filtrant}}$ des pressions (28, 30) en entrée et en sortie du média filtrant et d'au moins une valeur de débit du gaz d'échappement, et

- en fonction de la différence de grandeur entre la valeur de la perméabilité sans charge de particules C et ladite valeur calculée :

  - diagnostiquer une fuite anormale de gaz d'échappement ou une perméabilité anormale dans le média filtrant, et/ou
  - diagnostiquer une résistance au débit de gaz élevée anormalement élevée, dû par exemple à une vitrification ou à une fusion du média filtrant.

Dans le mode de réalisation, la valeur calculée est égale à :

$$\Delta P_{CSF}/Qv - AQm,$$

où :

$\Delta P_{CSF}$ est la différence de pression en amont et en aval du média filtrant (10),
Qv est le flux volumique du gaz d'échappement traversant le média filtrant,
Qm est le flux massique du gaz d'échappement traversant le média filtrant, et
A est une constante,

et on diagnostique :

- une fuite anormale de gaz d'échappement ou une perméabilité anormale dans le média filtrant si ladite valeur calculée est inférieure à ladite perméabilité sans charge de particules C, et/ou
- une résistance au débit de gaz élevée anormalement élevée, dû par exemple à une vitrification ou une fusion du média filtrant, si ladite valeur calculée est supérieure à ladite perméabilité sans charge de particules C, éventuellement en prenant compte d'une marge R pour accommoder une résistance accrue due à une quantité normale de particules dans le média filtrant.

Le procédé peut comporter en outre une étape de commande de la régénération du média filtrant lorsque la détermination de la charge de particules dans celui-ci dépasse un seuil prédéterminé.
Le procédé peut être avantageusement mis en oeuvre dans une boucle de contrôle et de commande faisant intervenir les opérations suivantes:

a- Enregistrement de $\Delta P_{CSF}$, Qm et Qv ;

b- Calcul de $K(m) = \dfrac{\Delta P_{CSF}}{Q_v} - AQ_m$ ;

c- Calcul de $m(t) = \dfrac{1}{B}\left(\dfrac{\Delta P_{CSF}}{Q_v} - AQ_m - C\right)$ ;

d- Si m(t)= seuil critique prédéterminé mseuil, alors déclenchement de la régénération
e- Répétition des opérations a à c jusqu'à m(t)=0
f - Si m(t)=0 alors fin de régénération
g - Contrôle de l'intégrité du média filtrant par vérification de la condition suivante :

$$\frac{\Delta P_{CSF}}{Q_v} - AQ_m < C$$

où :

$\Delta P_{CSF}$ est la différence de pression en entrée et en sortie du média filtrant (10),
$\rho$ est la densité du gaz d'échappement,

Qv est le flux volumique du gaz d'échappement traversant le média filtrant,

Qm est le flux massique du gaz d'échappement traversant le média filtrant,

C représente la perméabilité du substrat sans charge de particules, et

A est une constante.

La valeur de la pression des gaz d'échappement en amont du média filtrant, utilisée pour déterminer la différence $\Delta P_{média\ filtrant}$ des pressions en entrée et en sortie du média filtrant, peut être déterminée au moyen d'un capteur de pression.

En variante, la valeur de la pression des gaz d'échappement en amont du média filtrant, utilisée pour déterminer différence $\Delta P_{média\ filtrant}$ des pressions en entrée et en sortie du média filtrant peut être déterminée par calcul à partir de données relatives au fonctionnement du moteur.

Selon un deuxième aspect, l'invention concerne un procédé de déclenchement d'une phase de régénération d'un média filtrant d'un système d'échappement d'un moteur thermique, caractérisé en ce qu'il comprend les étapes de :

- déterminer à intervalles de temps définis la charge de particules présente dans le média filtrant par mise en oeuvre du procédé selon le premier aspect, et
- si la charge de particules déterminée dépasse un seuil déterminé, déclencher la phase de régénération du média filtrant.

Ce procédé peut comprendre en outre les étapes de :

- déterminer, à des intervalles de temps déterminés durant et/ou à l'issue de la phase de régénération, la charge de particules présente dans le média filtrant par mise en oeuvre du procédé selon le premier aspect,
- calculer la charge de particules régénérée en considérant la différence de charge de particules entre deux intervalles de détermination de la charge de particules régénérée, et
- gérer la durée et/ou la fréquence des phases de régénération en fonction de la charge de particules présente dans le média filtrant et/ou de la charge de particules régénérée.

Selon un troisième aspect, l'invention concerne un dispositif de détermination de la charge de particules présente dans un média filtrant d'un système d'échappement d'un moteur thermique, caractérisé en ce qu'il comprend :

- une mémoire, accessible lors de la détermination de la charge de particules, stockant une relation entre la perméabilité K(m) du média filtrant et la charge de particules, notamment la masse m, contenue dans le média filtrant,
- des moyens pour déterminer la différence $\Delta P_{média\ filtrant}$ des pressions en entrée et en sortie du média filtrant qui est assimilé à la somme de deux composants dont la première représente la perte de charge générée par l'écoulement des gaz à l'entrée et à la sortie du média filtrant et la seconde représente la perte de charge générée par les gaz d'échappement à la traversée du média filtrant et contenant la perméabilité K(m) comme variable,
- des moyens pour déterminer le débit de gaz traversant ledit média filtrant,
- des moyens pour calculer, à partir des valeurs déterminées, la valeur de la perméabilité K(m) du média filtrant, et
- des moyens pour déterminer la valeur de la charge de particules stockée dans ledit média filtrant à partir de la valeur de perméabilité K(m) et de la relation stockée en mémoire.

Les moyens de mémorisation peuvent contenir du code exécutable destiné à mettre en oeuvre le procédé selon le premier aspect.

Selon un quatrième aspect, l'invention concerne un ensemble de motorisation comprenant :

- un moteur thermique,
- un système d'échappement pour les gaz de combustion dudit moteur, comprenant un média filtrant,
- une intelligence permettant de gérer la régénération du média filtrant selon des critères déterminés,

caractérisé en ce qu'il intègre un dispositif de détermination de la charge de particules présente dans un média filtrant selon troisième aspect.

Le mode de réalisation préféré offre une technique pour déterminer une corrélation entre la perméabilité K(m) du média filtrant 10 et la masse de suie m(t) contenue dans le média filtrant, cette corrélation étant indépendante des conditions de fonctionnement du média filtrant (température, pression, nature du gaz, ...). A partir de cette corrélation, il devient possible de connaître la masse de suie contenue dans le filtre à particules.

L'invention et les avantages qui en découlent apparaîtront plus clairement à la lecture de la description qui suit de ses modes de réalisation préférés, donnée purement à titre d'exemples non-limitatifs par référence aux dessins annexés dans lesquels :

- la figure 1 est un schéma simplifié d'un véhicule à moteur à combustion interne équipé d'un dispositif de détermination de la quantité de suie dans son système d'échappement, conforme à la présente invention ;
- la figure 2 est un schéma de principe d'un système d'échappement d'un moteur thermique doté d'un média filtrant et les éléments fonctionnels intervenant dans la détermination de la charge en particules de ce dernier ; et
- la figure 3 est un schéma fonctionnel montrant de manière plus détaillée le centre de traitement de données relatives au média filtrant de la figure 2.

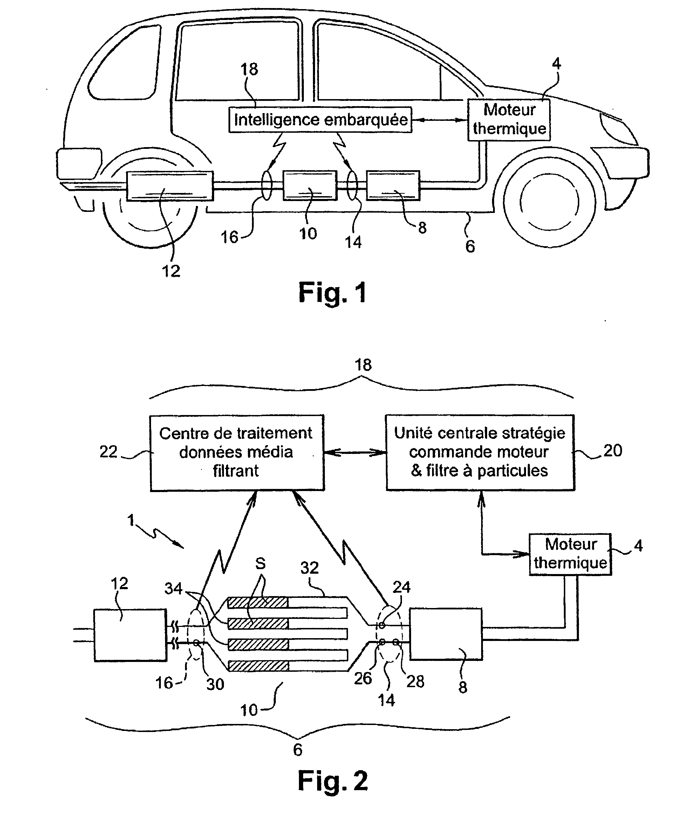

Afin de situer le mode de réalisation de l'invention 1, la figure 1 représente schématiquement un véhicule 2, en l'occurrence une automobile de tourisme, où l'on repère le moteur thermique 4, par exemple du type Diesel, et l'ensemble d'échappement catalysé 6. De manière connue, l'échappement catalysé 6 comporte, en partant du moteur, un catalyseur d'oxydation et/ou un dispositif connu par l'appellation anglo-saxonne de "Nox-Trap" 8, suivi d'un média filtrant 10, et d'un silencieux 12. On note que le catalyseur ainsi que le Nox-Trap 8 sont des éléments optionnels. Le média filtrant 10 peut être imprégné ou non imprégné, ce terme étant générique pour couvrir tout type de moyens de filtrage: filtre, substrat, etc. utilisé dans cette application technique.

Un ensemble de capteurs de paramètres des gaz d'échappement en entrée t en sortie du média filtrant 10 (respectivement 14 et 16) est relié à une intelligence embarquée du véhicule, désignée généralement par le repère 18.

Ainsi que le montre de façon plus détaillée la figure 2, l'intelligence embarquée 18 est décomposée en une unité centrale de stratégie de commande du moteur et du filtre à particule 20, et un centre de traitement des données pertinentes au média filtrant 22, relié à l'ensemble de capteurs en amont 14 et en aval 16. Le centre de traitement 22 est fonctionnellement relié à l'unité centrale 20, et permet ainsi de constituer une boucle de commande du moteur 4 en fonction des données issues de l'ensemble de capteurs 14 et 16.

La partie 14 de cet ensemble de capteurs en entrée (dite aussi en amont) comprend :

- un capteur 24 de mesure de la température T des gaz en entrée du média filtrant,
- un capteur 26 de mesure du débit massique Qm des gaz d'échappement en entrée du média filtrant, et
- un capteur 28 de mesure de la pression des gaz d'échappement en entrée du média filtrant.

La partie de cet ensemble de capteurs sortie (dite aussi en aval) comprend un capteur 30 de mesure de la pression des gaz d'échappement en sortie du média filtrant.

Le couple constitué par les capteurs de pression 28 et 30 en entrée et en sortie permet notamment de déterminer la pression différentielle à travers le média filtrant, soit la perte de charge, celle-ci étant la différence des pressions en amont et en aval.

De manière connue, le média filtrant 10 comporte dans un carter 32 un ensemble de surfaces en strates ou en serpentin 34, désigné lit de suie, prévu pour collecter les particules de suie émises par le moteur.

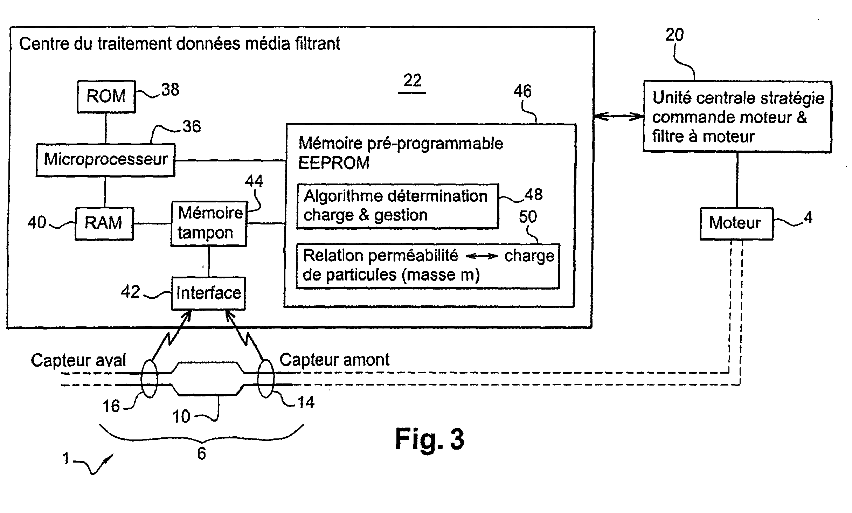

Ainsi que le montre la figure 3, l'architecture du centre de traitement de données du média filtrant 22 est basé sur un microprocesseur 36 dont le programme de base est stocké dans une mémoire figée (ROM) 38. Les données évolutives nécessaires au microprocesseur sont stockées dans une mémoire vive (RAM) 40. Les données issues des capteurs amont et aval 14 et 16 sont reçues par une interface 42 et transférées vers une mémoire tampon 44 fonctionnellement reliée au microprocesseur et à la mémoire vive 40.

Le microprocesseur 36 est en outre relié à une mémoire pré-programmable (EEPROM) 46 dans laquelle sont stockées des données pré-programmées. Ces données comprennent notamment un module algorithmique 48 de calcul de charge de particules dans le média filtrant 10 et de gestion de tâches afférant à ce dernier et un module de corrélation 50 stockant une relation déterminée entre la perméabilité du média filtrant d'une part et la charge de particules de suie, notamment la masse d'autre part. Cette relation est définie par une fonction mathématique ayant des constantes établies au préalable par modélisation ou expérimentation. Ces modules 48, 50 sont stockés sous forme de code exécutable et de données exploitables par le microprocesseur 36, lui permettant de déterminer à tout moment la quantité de suie présente dans le moteur.

Les moyens matériels décrits dans le cadre des figures 1 à 3 permettent ainsi de réaliser un ensemble de fonctionnalités relatives au bon fonctionnement du média filtrant 10 par des algorithmes et procédés conformes à la présente invention. En effet, l'ensemble 1 constitué du centre de traitement de données média filtrant 22 et des capteurs 14, 16 constitue un outil permettant de connaître à chaque instant t pendant le roulage du véhicule ou du fonctionnement du moteur, et donc pendant les phases de régénération, la masse de suie contenue dans le média filtrant 10. Cette connaissance est rendue accessible à chaque instant t pendant le roulage du véhicule, et encore plus particulièrement pendant les phases de régénération.

A partir des données des capteurs 24-30, l'outil 1 calcule une grandeur K(m) représentant la perméabilité du substrat que constitue le média filtrant. A cette fin, le module algorithmique 48 coopère avec le module 50 qui intègre une relation pré-établie entre cette grandeur K(m) et la masse de suie contenue dans le média filtrant m(t), pour déterminer l'état de chargement du média filtrant.

Le mode opératoire est basé sur la décomposition suivante de la perte de charge $\Delta P_{\text{média filtrant}}$ générée par le média filtrant 10 :

$$\Delta P_{\text{média filtrant}} = \Delta P_1 + \Delta P_2$$

où :

$\Delta P_1$ représente la perte de charge générée par l'écoulement des gaz à l'entrée et à la sortie du média filtrant (cônes, ....), dans les canaux du média filtrant, sur les faces d'entrées et de sortie du média filtrant. Ces dernières sont essentiellement liées aux propriétés du fluide ainsi qu'à l'état de surface et au type de singularités rencontrées par le fluide ; et

$\Delta P_2$ représente la perte de charge générée par le fluide à la traversée de la paroi du média filtrant (équation de DARCY). Cette dernière est essentiellement fonction de la perméabilité du substrat, de la quantité de suie déposée dans le média filtrant, ainsi que de la quantité de résidus.

Ainsi, la perte de charge $\Delta P_{\text{média filtrant}}$ peut se développer de la manière suivante :

$$\Delta P_{CSF} = A\rho Q_v^2 + K(m)Q_v = AQ_v Q_m + K(m)Q_v$$

d'où :

$$\frac{\Delta P_{CSF}}{Q_v} = AQ_m + K(m)$$

Ici, le sous-indice CSF s'assimile à l'indice "média filtrant", soit $\Delta_{PCSF} \equiv \Delta_{Pmédia\ filtrant}$.

On définit donc à chaque instant t un rapport, indépendant des conditions de régénération, soit indépendant de la pression P, notamment de la pression en entrée, et de la température T, notamment de la température en entrée. Dans l'exemple, ce rapport dépend seulement du débit massique à l'échappement, respectivement Qm, et la perméabilité K(m) du substrat, A étant une constante. Le débit volumique Qv est une valeur calculée à partir de : la mesure du débit massique Qm (capteur 26), la température (capteur 24), et la pression P (capteur 28), selon des lois bien établies.

La fonction de relation entre K(m) et la masse de suie m contenue dans le module de corrélation 50 est une fonction affine ayant la forme :

$$(K(m) = Bm(t) + C)$$

où B est une constante déterminée au préalable par expérimentation, constituant ainsi une constante empirique, et C représente la perméabilité du substrat (média filtrant 10) sans suie.

Le microprocesseur 36 calcule cette fonction affine pour tout instant t arbitraire, et obtient une valeur pour la masse m(t) de suie contenue dans le média filtrant à l'instant t sur la base de la définition suivante :

$$m(t) = \frac{1}{B}\left(\frac{\Delta P_{CSF}}{Q_v} - AQ_m - C\right)$$

Optionnellement, le microprocesseur 36 peut ensuite réaliser un deuxième traitement qui permet de diagnostiquer l'état du média filtrant utilisé. Ce diagnostic repose sur le raisonnement que si le média filtrant 10 est dépourvu de suie et que

$\dfrac{\Delta P_{CSF}}{Q_v} - AQ_m < C$ , alors une fissuration de ce dernier est diagnostiquée, cette dernière augmentant sa perméabilité.

Dans le cas contraire, soit $\Delta P_{CSF}/Qv$ - AQm > C, on pourra observer une résistance anormale au débit d'échappement de la part du média filtrant, dû par exemple à une vitrification, voire une fusion de son substrat constituant, ou tout autre mode ou condition de dégradation conduisant à une augmentation de pression différentielle $\Delta P$. Cette anomalie peut être constaté en considérant plus précisément la condition $\Delta P_{CSF}/Qv$ - AQm > C + R, où R est une valeur destinée à donner une marge pour prendre en compte de l'augmentation de résistance au débit due à une charge de suie normale.

Les étapes principales de l'algorithme 48 exécuté par le microprocesseur 36 se résument comme suit :

Opérations relatives à l'instant t sont effectuées successivement :

a- Enregistrement de $\Delta P_{CSF}$, Qm et Qv (Qv étant calculé sur la base de Qm, de la température T, dans l'exemple de la température en entrée, du média filtrant, et de la pression P, dans l'exemple de la pression en entrée, du média filtrant);

b- Calcul de $K(m) = \dfrac{\Delta P_{CSF}}{Q_v} - AQ_m \; ;$

c- Calcul de $m(t) = \dfrac{1}{B}\left(\dfrac{\Delta P_{CSF}}{Q_v} - AQ_m - C\right) \; ;$

d- Si m(t)= seuil critique prédéterminé mseuil, alors déclenchement de la régénération

e- Répétition des opérations a à c jusqu'à m(t)=0

f - Si m(t)=0 alors fin de régénération

g - Contrôle de l'intégrité du média filtrant par vérification de la condition suivante :

$$\frac{\Delta P_{CSF}}{Q_v} - AQ_m < C$$

Les données ainsi obtenues par calcul et/ou par mesure, telles que K(m), peuvent être utilisées pour l'ensemble des opérations de stratégie de contrôle moteur faisant intervenir l'intelligence embarquée 18 et se rapportant à la gestion du filtre à particules.

Ainsi, dans le mode de réalisation, le centre de traitement de données média filtrant et prévu pour effectuer les tâches suivantes :

- déterminer la masse de suie présente dans le média filtrant (catalysé ou non) avant et/ou après régénération. Cette dernière correspond à la différence entre la masse de suie produite par le moteur et la masse de suie régénérée. La connaissance de ces grandeurs permet de limiter la durée de fonctionnement des stratégies de régénération et donc de limiter une surconsommation;
- commander le déclenchement d'une régénération;
- protéger le média filtrant lors des phases de régénération. La criticité d'une régénération peut-être caractérisée par un paramètre, désigné d, faisant intervenir la vitesse de régénération. Ainsi, la régénération sera engagée dans la mesure où la masse de suie stockée dans le média filtrant ne conduit pas à une dégradation du média filtrant. Plus particulièrement, le paramètre d est le rapport de la vitesse de régénération - qui est liée à la vitesse de combustion des suies - ramenée au débit massique du gaz d'échappement. Il exprime ainsi le dégagement de chaleur par combustion des suies ramenée à la convection. Le suivi de ce paramètre permet de déterminer si la régénération risque d'évoluer vers une situation de danger en termes de concentration de chaleur: plus d est élevé, plus le processus se rapproche d'une situation dangereuse. On peut donc établir par calcul au moins un seuil de criticité pour un matériau filtrant donné, et ainsi intervenir pour s'assurer que la régénération ne s'effectue qu'en dessous de ce seuil, notamment en jouant sur les variables contrôlées et non subis. On peut par exemple provoquer une diminution de la température T des gaz de combustion lors de la régénération pour écarter le paramètre d du seuil de criticité. Plus d'informations concernant cet aspect sont présentées dans la demande de brevet français FR 02 07494 au nom de la demanderesse ;
- diagnostiquer une éventuelle dégradation du média filtrant à l'issue d'une régénération.

Le déclenchement d'un régénération peut être commandé, au niveau de l'unité centrale de stratégie de commande moteur 20, par divers moyens connus d'augmentation de la température des gaz d'échappement, par exemple en occasionnant un cycle de post-combustion ou en modifiant les conditions d'allumage et/ou d'injection.

Bien que particulièrement avantageuse pour les moteurs thermiques de type Diesel, l'invention peut être aussi mise en oeuvre avec d'autres types de moteurs thermiques.

L'invention permet de nombreuses variantes et de modes de réalisation, tant au niveau matériel qu'algorithmique.

Par exemple, on peut envisager de s'affranchir du capteur 28 de pression en amont si l'un et/ou l'autre de ces paramètres peut être déterminé à l'aide des données moteur contenues dans l'intelligence embarquée 18.

## Revendications

1. Procédé de détermination de la charge de particules filtrées présente dans un média filtrant (10) d'un système d'échappement (6) d'un moteur thermique (4), comprenant les étapes suivantes:

- établir préalablement une relation entre la perméabilité K(m) du média filtrant (10) et la charge, notamment la masse m, de particules contenue dans ledit média filtrant,
- stocker ladite relation dans une mémoire (46) accessible lors de la détermination de la charge de particules,
- déterminer la différence $\Delta P_{média\ filtrant}$ des pressions (28, 30) en entrée et en sortie du média filtrant, qui est assimilé à la somme de deux composants ($\Delta P1$, $\Delta P2$), dont la première ($\Delta P1$) représente la perte de charge générée par l'écoulement des gaz à l'entrée et à la sortie du média filtrant, et la seconde ($\Delta P2$) représente la perte de charge générée par les gaz d'échappement à la traversée du média filtrant et contenant la perméabilité K(m) comme variable,
- determiner le débit de gaz (Qv) traversant ledit média filtrant,
- calculer, à partir desdites valeurs déterminées, la valeur de la perméabilité K(m) du média filtrant, et
- utiliser cette valeur de perméabilité K(m) dans ladite relation stockée en mémoire pour déterminer la valeur de la charge de particules contenue dans ledit média filtrant.

2. Procédé selon la revendication 1, **caractérisé en ce que** la valeur déterminée du débit des gaz traversant ledit média filtrant (10) correspond au débit volumique Qv, et **en ce que** ce débit volumique est calculé à partir de valeurs mesurées : du débit massique Qm des gaz traversant le média filtrant, de la température T en entrée ou en sortie du média filtrant, et de la pression P en entrée ou en sortie du média filtrant.

3. Procédé selon la revendication 1 ou 2, **caractérisé en ce que** ladite relation entre la perméabilité K(m) du média filtrant (10) et la charge de particules contenue dans ledit média filtrant est exprimée sous une forme indépendante des conditions de régénération du média filtrant, notamment une forme indépendante de la pression absolue P en entrée ou en sortie du média filtrant et de la température T en entrée ou en sortie du média filtrant.

4. Procédé selon l'une quelconque des revendications 1 à 3, **caractérisé en ce que** ladite relation entre la perméabilité K(m) du média filtrant (10) et la charge de particules contenue dans ledit média filtrant est exprimée en prenant pour seuls variables : i) la différence $\Delta P_{média\ filtrant}$ des pressions (28, 30) en amont et en aval du média filtrant et ii) le débit de gaz (24, 26) traversant ledit média filtrant.

5. Procédé selon l'une quelconque des revendications 1 à 4, **caractérisé en ce que** la détermination du débit de gaz comprend la détermination (24) du débit volumique Qv des gaz d'échappement et la détermination (26) du débit massique Qm des gaz d'échappement.

6. Procédé selon l'une quelconque des revendications 1 à 5, **caractérisé en ce que** pour le calcul (36) de la valeur de la perméabilité K(m), on considère que ladite différence des pressions $\Delta P_{média\ filtrant}$ est liée au flux des gaz d'échappement par une fonction polynomiale d'ordre deux ayant comme variable le flux volumique Qv des gaz d'échappement, où le terme linéaire de la variable Qv a comme coefficient ladite perméabilité K(m).

7. Procédé selon l'une quelconque des revendications 1 à 6, **caractérisé en ce que** le calcul de la valeur est réalisé sur la base de la relation :

$$\Delta P_{CSF} = A\rho Q_v^2 + K(m)Q_v = AQ_vQ_m + K(m)Q_v$$

d'où:

$$\frac{\Delta P_{CSF}}{Q_v} = AQ_m + K(m)$$

où :

$\Delta P_{CSF}$ est la différence des pressions en entrée et en sortie du média filtrant (10),
$\rho$ est la densité du gaz d'échappement,
Qv est le flux volumique du gaz d'échappement traversant le média filtrant,
Qm est le flux massique du gaz d'échappement traversant le média filtrant, et
A est une constante.

**8.** Procédé selon l'une quelconque des revendications 1 à 7, **caractérisé en ce que** ladite relation stockée en mémoire (46) entre perméabilité K(m) du média filtrant (10) et la charge de particules contenue dans ledit média filtrant est sous forme de fonction affine.

**9.** Procédé selon l'une quelconque des revendications 1 à 8, **caractérisé en ce que** ladite relation stockée en mémoire (46) entre la perméabilité K(m) du média filtrant (10) et la charge de particules contenue dans ledit média filtrant est sous la forme :

$$K(m) = Bm(t) + C,$$

où B est une constante empirique et C représente la perméabilité du média filtrant sans charge de particules.

**10.** Procédé selon l'une quelconque des revendications 1 à 9, **caractérisé en ce qu'**il comprend en outre un diagnostic de l'état du média filtrant (10), ce diagnostic comprenant les étapes de :

- stocker en mémoire la valeur de la perméabilité sans charge de particules C du média filtrant (10) lorsque dépourvu de charge de particules,
- comparer cette valeur de perméabilité sans charge de particules C avec une valeur calculée à partir de la valeur de la différence $\Delta P_{média\ filtrant}$ des pressions (28, 30) en entrée et en sortie du média filtrant et d'au moins une valeur de débit du gaz d'échappement, et
- en fonction de la différence de grandeur entre la valeur de la perméabilité sans charge de particules C et ladite valeur calculée :

- diagnostiquer une fuite anormale de gaz d'échappement ou une perméabilité anormale dans le média filtrant, et/ou
- diagnostiquer une résistance au débit de gaz anormalement élevée, due par exemple à une vitrification ou à une fusion du média filtrant.

**11.** Procédé selon l'une quelconque des revendications 1 à 10, **caractérisé en ce que** ladite valeur calculée est égale à :

$$\Delta P_{CSF}/Qv - AQm,$$

où :

$\Delta P_{CSF}$ est la différence de pression en amont et en aval du média filtrant (10),
Qv est le flux volumique du gaz d'échappement traversant le média filtrant,
Qm est le flux massique du gaz d'échappement traversant le média filtrant, et
A est une constante,

et **en ce que** l'on diagnostique :

- une fuite anormale de gaz d'échappement ou une perméabilité anormale dans le média filtrant si ladite valeur

EP 1 475 523 B1

calculée est inférieure à ladite perméabilité sans charge de particules C, et/ou
- une résistance au débit de gaz anormalement élevée, due par exemple à une vitrification ou une fusion du média filtrant, si ladite valeur calculée est supérieure à ladite perméabilité sans charge de particules C, éventuellement en prenant en compte une marge R pour accommoder une résistance accrue due à une quantité normale de particules dans le média filtrant.

**12.** Procédé selon l'une quelconque des revendications 1 à 11, **caractérisé en ce qu'**il comporte une étape de commande de la régénération du média filtrant (10) lorsque la détermination de la charge de particules dans celui-ci dépasse un seuil prédéterminé.

**13.** Procédé selon l'une quelconque des revendications 1 à 12, **caractérisé en ce qu'**il est mis en oeuvre dans une boucle de contrôle et de commande faisant intervenir les opérations suivantes:

a- Enregistrement de $\Delta P_{CSF}$, Qm et Qv ;

b- Calcul de $K(m) = \dfrac{\Delta P_{CSF}}{Q_v} - AQ_m$ ;

c- Calcul de $m(t) = \dfrac{1}{B}\left(\dfrac{\Delta P_{CSF}}{Q_v} - AQ_m - C\right)$ ;

d- Si m(t)= seuil critique prédéterminé mseuil, alors déclenchement de la régénération
e- Répétition des opérations a à c jusqu'à m(t)=0
f - Si m(t)=0 alors fin de régénération
g - Contrôle de l'intégrité du média filtrant par vérification de la condition suivante :

$$\frac{\Delta P_{CSF}}{Q_v} - AQ_m < C$$

où :

$\Delta P_{CSF}$ est la différence de pression en entrée et en sortie du média filtrant (10),
B est une constante empirique,
Qv est le flux volumique du gaz d'échappement traversant le média filtrant,
Qm est le flux massique du gaz d'échappement traversant le média filtrant,
C représente la perméabilité du substrat sans charge de particules, et
A est une constante.

**14.** Procédé selon l'une quelconque des revendications 1 à 13, **caractérisé en ce que** la valeur de la pression des gaz d'échappement en entrée du média filtrant (10), utilisée pour déterminer la différence $\Delta P_{média\ filtrant}$ des pressions en entrée et en sortie du média filtrant, est déterminée au moyen d'un capteur de pression (28).

**15.** Procédé selon l'une quelconque des revendications 1 à 13, **caractérisé en ce que** la valeur de la pression des gaz d'échappement en entrée du média filtrant (10), utilisée pour déterminer la différence $\Delta P_{média\ filtrant}$ des pressions en entrée et en sortie du média filtrant est déterminée par calcul à partir de données relatives au fonctionnement du moteur (4).

**16.** Procédé de déclenchement d'une phase de régénération d'un média filtrant (10) d'un système d'échappement (6) d'un moteur thermique (4), **caractérisé en ce qu'**il comprend les étapes de :

- déterminer à intervalles de temps définis la charge de particules présente dans le média filtrant (10) par mise en oeuvre du procédé selon l'une quelconque des revendications 1 à 14, et
- si ladite charge de particules déterminée dépasse un seuil déterminé, déclencher la phase de régénération du média filtrant.

**17.** Procédé selon la revendication 16, **caractérisé en ce qu'**il comprend en outre les étapes de :

11

- déterminer, à des intervalles de temps déterminés durant et/ou à l'issue de la phase de régénération, la charge de particules présente dans le média filtrant (10) par mise en oeuvre du procédé selon l'une quelconque des revendications 1 à 15,
- calculer la charge de particules régénérée en considérant la différence de charge de particules entre deux intervalles de détermination de la charge de particules régénérée, et
- gérer la durée et/ou la fréquence des phases de régénération en fonction de la charge de particules présente dans le média filtrant et/ou de la charge de particules régénérée.

**18.** Dispositif de détermination de la charge de particules présente dans un média filtrant (10) d'un système d'échappement (6) d'un moteur thermique (4), **caractérisé en ce qu'**il comprend :

- une mémoire (46), accessible lors de la détermination de la charge de particules, stockant une relation entre la perméabilité K(m) du média filtrant (10) et la charge de particules, notamment la masse m, contenue dans ledit média filtrant (10),
- des moyens (24, 26, 28, 30) pour déterminer la différence $\Delta P_{\text{média filtrant}}$ des pressions (28, 30) en entrée et en sortie du média filtrant (10), qui est assimilé à la somme de deux composants ($\Delta P1$, $\Delta P2$), dont la première ($\Delta P1$) représente la perte de charge générée par l'écoulement des gaz à l'entrée et à la sortie du média filtrant (18), et la seconde ($\Delta P2$) représente la perte de charge générée par les gaz d'échappement à la traversée du média filtrant (10) et contenant la perméabilité K(m) comme variable,
- des moyens (36) pour determiner le débit de gaz (Qv) traversant ledit média filtrant (10),
- des moyens (36) pour calculer, à partir desdites valeurs déterminées, la valeur de la perméabilité K(m) du média filtrant (10), et
- des moyens (36) pour déterminer la valeur de la charge de particules stockée dans ledit média filtrant (10) à partir de la valeur de perméabilité K(m) et de ladite relation stockée en mémoire (46).

**19.** Dispositif selon la revendication 18, **caractérisé en ce qu'**il comporte des moyens de mémorisation (36, 38, 46) contenant du code exécutable destiné à mettre en oeuvre le procédé selon l'une quelconque des revendications 1 à 18.

**20.** Ensemble de motorisation comprenant :

- un moteur thermique (4),
- un système d'échappement (6) pour les gaz de combustion dudit moteur, comprenant un média filtrant (10),
- une intelligence (18) permettant de gérer la régénération du média filtrant selon des critères déterminés,

**caractérisé en ce qu'**il intègre un dispositif de détermination de la charge de particules présente dans un média filtrant (10) selon l'une quelconque des revendications 18 ou 19.

**Claims**

**1.** Method of determining the filtered particle loading present in a filter medium (10) of an exhaust system (6) of an internal combustion engine (4), comprising the following steps:

- pre-establishing a relation between the permeability K(m) of the filter medium (10) and the particle loading, in particular the mass m, contained in the said filter medium,
- storing the said relation in a memory (46) accessible during the determination of the particle loading,
- determining the difference $\Delta P_{\text{filter medium}}$ of the pressures (28, 30) at the inlet and at the outlet of the filter medium, which is regarded as the sum of two components ($\Delta P1$, $\Delta P2$), the first ($\Delta P1$) of which represents the head loss generated by the flow of the gases at the inlet and at the outlet of the filter medium, and the second ($\Delta P2$) which represents the head loss generated by the exhaust gases on crossing the filter medium and containing the permeability K(m) as variable,
- determining the flow rate of gas (Qv) crossing the said filter medium,
- calculating, on the basis of the said determined values the value of the permeability K(m) of the filter medium, and
- using this value of permeability K(m) in the said relation stored in memory to determine the value of the particle loading contained in the said filter medium.

**2.** Method according to Claim 1, **characterized in that** the determined value of the flow rate of the gases crossing the said filter medium (10) corresponds to the volume flow rate Qv, and **in that** this volume flow rate is calculated on the basis of measured values, of the mass flow rate Qm of the gases crossing the filter medium, of the temperature T at the inlet or at the outlet of the filter medium, and of the pressure P at the inlet or at the outlet of the filter medium.

3. Method according to Claim 1 or 2, **characterized in that** the said relation between the permeability K(m) of the filter medium (10) and the particle loading contained in the said filter medium is expressed in a form independent of the conditions of regeneration of the filter medium, in particular a form independent of the absolute pressure (P) at the inlet or at the outlet of the filter medium and of the temperature T at the inlet or at the outlet of the filter medium.

4. Method according to any one of Claims 1 to 3, **characterized in that** the said relation between the permeability K(m) of the filter medium (10) and the particle loading contained in the said filter medium is expressed taking as lone variables: i) the difference $\Delta P_{filter\ medium}$ of the pressures (28, 30) upstream and downstream of the filter medium and ii) the flow rate of gas (24, 26) crossing the said filter medium.

5. Method according to any one of Claims 1 to 4, **characterized in that** the determination of the gas flow rate comprises the determination (24) of the volume flow rate Qv of the exhaust gases and the determination (26) of the mass flow rate Qm of the exhaust gases.

6. Method according to any one of Claims 1 to 5, **characterized in that** for the calculation (36) of the value of the permeability K(m), the said difference of the pressures $\Delta P_{filter\ medium}$ is considered to be related to the flow of the exhaust gases by a polynomial function of order two having as variable the volume flow Qv of the exhaust gases, where the linear term of the variable Qv has the said permeability K(m) as coefficient.

7. Method according to any one of Claims 1 to 6, **characterized in that** the calculation of the value is carried out on the basis of the relation:

$$\Delta P_{CSF} = A\rho Q_v^2 + K(m)Q_v = AQ_vQ_m + K(m)Q_v$$

whence:

$$\frac{\Delta P_{CSF}}{Q_v} = AQ_m + K(m)$$

where:

$\Delta P_{CSF}$ is the difference of the pressures at the inlet and at the outlet of the filter medium (10),
$\rho$ is the density of the exhaust gas,
Qv is the volume flow of the exhaust gas crossing the said filter medium,
Qm is the mass flow of the exhaust gas crossing the filter medium, and
A is a constant.

8. Method according to any one of Claims 1 to 7, **characterized in that** the said relation stored in memory (46) between permeability K(m) of the filter medium (10) and the particle loading contained in the said filter medium is in the form of an affine function.

9. Method according to any one of Claims 1 to 8, **characterized in that** the said relation stored in memory (46) between the permeability K(m) of the filter medium (10) and the particle loading contained in the said filter medium is in the form:

$$K(m) = Bm(t) + C$$

where B is an empirical constant and C represents the permeability of the filter medium with no particle loading.

**10.** Method according to any one of Claims 1 to 9, **characterized in that** it furthermore comprises a diagnostic of the state of the filter medium (10), this diagnostic comprising the steps of:

- storing in memory the value of the permeability without particle loading C of the filter medium (10) when devoid of particle loading,
- comparing this value of permeability without particle loading C with a value calculated on the basis of the value of the difference $\Delta P_{filter\ medium}$ of the pressures (28, 30) at the inlet and at the outlet of the filter medium and of at least one value of flow rate of the exhaust gas, and
- as a function of the difference of magnitude between the value of the permeability without particle loading C and the said calculated value:

  - diagnosing an abnormal leakage of exhaust gas or an abnormal permeability in the filter medium, and/or
  - diagnosing an abnormally high resistance to the gas flow rate, due for example to vitrification or to fusing of the filter medium.

**11.** Method according to any one of Claims 1 to 10, **characterized in that** the said calculated value is equal to:

$$\Delta P_{CSF}/Qv \ - \ AQm$$

where:

$\Delta P_{CSF}$ is the difference of pressure upstream and downstream of the filter medium (10),
Qv is the volume flow of the exhaust gas crossing the said filter medium,
Qm is the mass flow of the exhaust gas crossing the filter medium, and
A is a constant,

and **in that** there is diagnosed:

- an abnormal leakage of exhaust gas or an abnormal permeability in the filter medium if the said calculated value is less than the said permeability without particle loading C, and/or
- an abnormally high resistance to the gas flow rate, due for example to vitrification or to fusion of the filter medium, if the said calculated value is greater than the said permeability without particle loading C, possibly taking into account a margin R to accommodate an increased resistance due to a normal amount of particles in the filter medium.

**12.** Method according to any one of Claims 1 to 11, **characterized in that** it comprises a step of commanding the regeneration of the filter medium (10) when the determination of the particle loading therein exceeds a predetermined threshold.

**13.** Method according to any one of Claims 1 to 12, **characterized in that** it is implemented in a command and control loop involving the following operations:

a- Recording of $\Delta P_{CSF}$, Qm and Qv;

b- Calculation of $K(m) \ = \ \dfrac{\Delta P_{CSF}}{Q_v} - AQ_m$ ;

c- Calculation of $m(t) \ = \ \dfrac{1}{B}\left( \dfrac{\Delta P_{CSF}}{Q_v} - AQ_m - C \right)$ ;

d- If m(t) = predetermined critical threshold mthreshold, then triggering of regeneration
e- Repetition of operations a to c until m(t) = 0
f- If m(t) = 0 then end of regeneration
g- Monitoring of the integrity of the filter medium by checking of the following condition:

$$\frac{\Delta P_{CSF}}{Q_v} - AQ_m < C$$

where:

$\Delta P_{CSF}$ is the difference of pressure at the inlet and at the outlet of the filter medium (10),
B is an empirical constant,
Qv is the volume flow of the exhaust gas crossing the said filter medium,
Qm is the mass flow of the exhaust gas crossing the filter medium,
C represents the permeability of the substrate without particle loading, and
A is a constant.

**14.** Method according to any one of Claims 1 to 13, **characterized in that** the value of the pressure of the exhaust gases at the inlet of the filter medium (10), used to determine the difference $\Delta P_{\text{filter medium}}$ of the pressures at the inlet and at the outlet of the filter medium, is determined by means of a pressure sensor (28).

**15.** Method according to any one of Claims 1 to 13, **characterized in that** the value of the pressure of the exhaust gases at the inlet of the filter medium (10), used to determine the difference $\Delta P_{\text{filter medium}}$ of the pressures at the inlet and at the outlet of the filter medium, is determined by calculation on the basis of data relating to the operation of the engine (4).

**16.** Method of triggering a phase of regeneration of a filter medium (10) of an exhaust system (6) of an internal combustion engine (4) **characterized in that** it comprises the steps of:

- determining at defined time intervals the particle loading present in the filter medium (10) by implementing the method according to any one of Claims 1 to 14, and
- if the said determined particle loading exceeds a determined threshold, triggering the phase of regeneration of the filter medium.

**17.** Method according to Claim 16, **characterized in that** it furthermore comprises the steps of:

- determining, at determined time intervals during and/or on completion of the regeneration phase, the particle loading present in the filter medium (10) by implementing the method according to any one of Claims 1 to 15,
- calculating the regenerated particle loading by considering the difference of particle loading between two intervals of determination of the regenerated particle loading, and
- managing the duration and/or the frequency of the regeneration phases as a function of the particle loading present in the filter medium and/or of the regenerated particle loading.

**18.** Device for determining the particle loading present in a filter medium (10) of an exhaust system (6) of an internal combustion engine (4), **characterized in that** it comprises:

- a memory (46), accessible during the determination of the particle loading, storing a relation between the permeability K(m) of the filter medium (10) and the particle loading, in particular the mass m, contained in the said filter medium (10),
- means (24, 26, 28, 30) for determining the difference $\Delta P_{\text{filter medium}}$ of the pressures (28, 30) at the inlet and at the outlet of the filter medium (10), which is regarded as the sum of two components ($\Delta P1$, $\Delta P2$), the first ($\Delta P1$) of which represents the head loss generated by the flow of the gases at the inlet and at the outlet of the filter medium (10), and the second ($\Delta P2$) which represents the head loss generated by the exhaust gases on crossing the filter medium (10) and containing the permeability K(m) as variable,
- means (36) for determining the gas flow rate (Qv) crossing the said filter medium (10),
- means (36) for calculating, on the basis of the said determined values, the value of the permeability K(m) of the filter medium (10), and
- means (36) for determining the value of the particle loading stored in the said filter medium (10) on the basis of the value of permeability K(m) and of the said relation stored in memory (46).

**19.** Device according to Claim 18, **characterized in that** it comprises means of storage (36, 38, 46) containing executable code intended to implement the method according to any one of Claims 1 to 18.

20. Vehicle engine assembly comprising:

- an internal combustion engine (4),
- an exhaust system (6) for the combustion gases of the said engine, comprising a filter medium (10),
- an intelligence (18) making it possible to manage the regeneration of the filter medium according to determined criteria,

**characterized in that** it integrates a device for determining the particle loading present in a filter medium (10) according to any one of Claims 18 or 19.

**Patentansprüche**

1. Verfahren zur Bestimmung der Filterpartikellast, die in einem Filtermedium (10) eines Auspuffsystems (6) eines Verbrennungsmotors (4) vorhanden ist, umfassend die folgenden Schritte:

   - vorherige Herstellung eines Verhältnisses zwischen der Permeabilität K(m) des Filtermediums (10) und der Last, insbesondere der Masse m, von Partikeln, die in dem Filtermedium enthalten ist,
   - Speicherung des Verhältnisses in einem Speicher (46), der bei der Bestimmung der Partikellast zugänglich ist,
   - Bestimmung des Unterschieds $\Delta P_{Filtermedium}$ der Druckwerte (28, 30) am Eingang und am Ausgang des Filtermediums, der der Summe der beiden Komponenten ($\Delta P1$, $\Delta P2$) gleichgesetzt wird, wobei die erste ($\Delta P1$) den Lastverlust darstellt, der durch das Ausströmen der Gase am Eingang und am Ausgang des Filtermediums erzeugt wird, und die zweite ($\Delta P2$) den Lastverlust darstellt, der von den Auspuffgasen beim Durchströmen des Filtermediums erzeugt wird, und die Permeabilität K(m) als Variable enthält,
   - Bestimmung der Gasmenge (Qv), die durch das Filtermedium strömt,
   - Berechnung des Wertes der Permeabilität K(m) des Filtermediums aus den bestimmten Werten, und
   - Verwendung dieses Permeabilitätswertes K(m) in dem im Speicher gespeicherten Verhältnis für die Bestimmung des Wertes der Partikellast, die im Filtermedium enthalten ist.

2. Verfahren nach Anspruch 1, **dadurch gekennzeichnet, dass** der bestimmte Werte der Menge der durch das Filtermedium (10) strömenden Gase der volumenbezogenen Menge Qv entspricht, und dass diese volumenbezogene Menge aus gemessenen Werten, der massebezogenen Menge Qm der durch das Filtermedium strömenden Gase, der Temperatur T am Eingang oder am Ausgang des Filtermediums und des Drucks P am Eingang oder am Ausgang des Filtermediums, berechnet wird.

3. Verfahren nach Anspruch 1 oder 2, **dadurch gekennzeichnet, dass** das Verhältnis zwischen der Permeabilität K(m) des Filtermediums (10) und der Partikellast, die in dem Filtermedium enthalten ist, in einer von den Regenerationsbedingungen des Filtermediums unabhängigen Form ausgedrückt wird, insbesondere in einer vom Absolutdruck P am Eingang oder am Ausgang des Filtermediums und von der Temperatur T am Eingang oder am Ausgang des Filtermediums unabhängigen Form.

4. Verfahren nach einem der Ansprüche 1 bis 3, **dadurch gekennzeichnet, dass** das Verhältnis zwischen der Permeabilität K(m) des Filtermediums (10) und der in dem Filtermedium enthaltenen Partikellast ausgedrückt wird, wobei als einzige Variable herangezogen werden: i) der Unterschied $\Delta P_{Filtermedium}$ der Druckwerte (28, 30) stromaufwärts und stromabwärts zum Filtermedium und ii) die Gasmenge (24, 26), die durch das Filtermedium strömt.

5. Verfahren nach einem der Ansprüche 1 bis 4, **dadurch gekennzeichnet, dass** die Bestimmung der Gasmenge die Bestimmung (24) der volumenbezogenen Menge Qv der Auspuffgase und die Bestimmung (26) der massebezogenen Menge Qm der Auspuffgase umfasst.

6. Verfahren nach einem der Ansprüche 1 bis 5, **dadurch gekennzeichnet, dass** für die Berechnung (36) des Permeabilitätswertes K(m) angenommen wird, dass der Unterschied der Druckwerte $\Delta P_{Filtermedium}$ mit dem Fluss der Auspuffgase durch eine polynominale Funktion zweiter Ordnung verbunden ist, die als Variable den volumenbezogenen Fluss Qv der Auspuffgase hat, wobei der lineare Term der Variablen Qv als Koeffizienten die Permeabilität K(m) hat.

7. Verfahren nach einem der Ansprüche 1 bis 6, **dadurch gekennzeichnet, dass** die Berechnung des Wertes auf Basis folgenden Verhältnisses erfolgt:

$$\Delta P_{CSF} = ApQ^2{}_v + K(m)Q_v = AQ_vQ_m + K(m)Q_v$$

woraus sich ergibt:

$$\frac{\Delta P_{CSF}}{Q_V} = AQ_m + K(m)$$

wobei:

$\Delta P_{CSF}$ der Unterschied der Druckwerte am Eingang und am Ausgang des Filtermediums (10) ist,
$\rho$ die Dichte der Auspuffgase ist,
Qv der volumenbezogene Fluss der das Filtermedium durchströmenden Auspuffgase ist,
Qm der massebezogene Fluss der das Filtermedium durchströmenden Auspuffgase ist, und
A eine Konstante ist.

8. Verfahren nach einem der Ansprüche 1 bis 7, **dadurch gekennzeichnet, dass** das im Speicher (46) gespeicherte Verhältnis zwischen der Permeabilität K(m) des Filtermediums (10) und der in dem Filtermedium enthaltenen Partikellast in Form einer affinen Funktion vorhanden ist.

9. Verfahren nach einem der Ansprüche 1 bis 8, **dadurch gekennzeichnet, dass** das im Speicher (46) gespeicherte Verhältnis zwischen der Permeabilität K(m) des Filtermediums (10) und der in dem Filtermedium enthaltenen Partikellast in folgender Form vorhanden ist:

$$K(m) = Bm(t) + C$$

wobei B eine empirische Konstante ist und C die Permeabilität des Filtermediums ohne Partikellast darstellt.

10. Verfahren nach einem der Ansprüche 1 bis 9, **dadurch gekennzeichnet, dass** es ferner eine Diagnose des Zustands des Filtermediums (10) umfasst, wobei diese Diagnose die folgenden Schritte umfasst:

- Speichern des Permeabilitätswertes ohne Partikellast C des Filtermediums (10) im Speicher, wenn keine Partikellast vorhanden ist,
- Vergleichen dieses Permeabilitätswertes ohne Partikellast C mit einem aus dem Wert des Unterschieds $\Delta P_{Filtermedium}$ der Druckwerte (28, 30) am Eingang und am Ausgang des Filtermediums und mindestens einem Wert der Auspuffgasmenge berechneten Wert, und
- in Abhängigkeit vom Größenunterschied zwischen dem Wert der Permeabilität ohne Partikellast C und dem berechneten Wert:

- Diagnose einer anormalen Leckage von Auspuffgasen oder einer anormalen Permeabilität im Filtermedium, und/oder
- Diagnose eines anormal hohen Widerstandes gegen die Gasmenge, beispielsweise auf Grund einer Verglasung oder eines Schmelzens des Filtermediums.

11. Verfahren nach einem der Ansprüche 1 bis 10, **dadurch gekennzeichnet, dass** der berechnete Wert gleich ist:

$$\Delta P_{CSF}/Qv - AQm,$$

wobei $\Delta P_{CSF}$ der Druckunterschied stromaufwärts und stromabwärts zum Filtermedium (10) ist,

Qv der volumenbezogene Fluss des das Filtermedium durchströmenden Auspuffgases ist,
Qm der massebezogene Fluss des das Filtermedium durchströmenden Auspuffgases ist, und
A eine Konstante ist,
und dass diagnostiziert wird:

- eine anormale Leckage der Auspuffgase oder eine anormale Permeabilität im Filtermedium, wenn der berechnete Wert geringer als die Permeabilität ohne Partikellast C ist, und/oder
- ein anormal hoher Widerstand gegen die Gasmenge, beispielsweise auf Grund einer Verglasung oder eines Schmelzens des Filtermediums, wenn der berechnete Wert größer als die Permeabilität ohne Partikellast C ist, wobei eventuell eine Marge R berücksichtigt wird, um einen höheren Widerstand auf Grund einer normalen Partikelmenge im Filtermedium anzupassen.

12. Verfahren nach einem der Ansprüche 1 bis 11, **dadurch gekennzeichnet, dass** es einen Schritt der Steuerung der Regeneration des Filtermediums (10) umfasst, wenn die Bestimmung der Partikellast in diesem eine vorbestimmte Grenze überschreitet.

13. Verfahren nach einem der Ansprüche 1 bis 12, **dadurch gekennzeichnet, dass** es in einer Kontroll- und Steuerschleife eingesetzt wird, die die folgenden Verfahrensschritte einsetzt:

a - Aufzeichnung von $\Delta P_{CSF}$, Qm und Qv;

b - Berechnung von $K(m) = \dfrac{\Delta P_{CSF}}{Q_V} - AQ_m$ ;

c - Berechnung von $m(t) = \dfrac{1}{B}\left(\dfrac{\Delta P_{CSF}}{Q_V} - AQ_m - C\right)$ ;

d - wenn m(t) = vorbestimmte kritische Grenze mGrenze ist, Auslösung der Regeneration
e - Wiederholung der Schritte a bis c bis m(t)=0
f - wenn m(t)=0 Ende der Regeneration
g - Kontrolle der Integrität des Filtermediums durch Überprüfung folgender Bedingung:

$$\frac{\Delta P_{CSF}}{Q_V} - AQ_m < C$$

wobei:

$\Delta P_{CSF}$ der Druckunterschied am Eingang und am Ausgang des Filtermediums (10) ist,
B eine empirische Konstante ist,
Qv der volumenbezogene Fluss des das Filtermedium durchströmenden Auspuffgases ist,
Qm der massebezogene Fluss des das Filtermedium durchströmenden Auspuffgases ist,
C die Permeabilität des Substrats in der Partikellast darstellt, und
A eine Konstante ist.

14. Verfahren nach einem der Ansprüche 1 bis 13, **dadurch gekennzeichnet, dass** der Wert des Drucks der Auspuffgase am Eingang des Filtermediums (10), der verwendet wird, um den Unterschied $\Delta P_{Filtermedium}$ der Druckwerte am Eingang und am Ausgang des Filtermediums zu bestimmen, mit Hilfe eines Druckfühlers (28) bestimmt wird.

15. Verfahren nach einem der Ansprüche 1 bis 13, **dadurch gekennzeichnet, dass** der Wert des Drucks der Auspuffgase am Eingang des Filtermediums (10), der verwendet wird, um den Unterschied $\Delta P_{Filtermedium}$ der Druckwerte am Eingang und am Ausgang des Filtermediums zu bestimmen, durch Berechnung aus Daten im Zusammenhang mit der Funktion des Motors (4) bestimmt wird.

16. Verfahren zum Auslösen einer Regenerationsphase eines Filtermediums (10) eines Auspuffsystems (6) eines Verbrennungsmotors (4), **dadurch gekennzeichnet, dass** es die folgenden Schritte umfasst:

- Bestimmung der in dem Filtermedium (10) vorhandenen Partikellast in definierten Zeitintervallen durch Einsatz des Verfahrens nach einem der Ansprüche 1 bis 14, und
- wenn die bestimmte Partikellast eine bestimmte Grenze überschreitet, Auslösen der Regenerationsphase des Filtermediums.

**17.** Verfahren nach Anspruch 16, **dadurch gekennzeichnet, dass** es ferner die folgenden Schritte umfasst:

- in regelmäßigen Zeitintervallen Bestimmung während und/oder nach der Regenerationsphase der in dem Filtermedium (10) vorhandenen Partikellast durch Einsatz des Verfahrens nach einem der Ansprüche 1 bis 15,
- Berechnen der regenerierten Partikellast unter Berücksichtigung des Unterschiedes der Partikellast zwischen zwei Intervallen der Bestimmung der regenerierten Partikellast, und
- Steuerung der Dauer und/oder der Frequenz der Regenerationsphasen in Abhängigkeit von der im Filtermedium vorhandenen Partikellast und/oder der regenerierten Partikellast.

**18.** Vorrichtung zur Bestimmung der in einem Filtermedium (10) eines Auspuffsystems (6) eines Verbrennungsmotors (4) vorhandenen Partikellast, **dadurch gekennzeichnet, dass** sie umfasst:

- einen Speicher (46), der bei der Bestimmung der Partikellast zugänglich ist und ein Verhältnis zwischen der Permeabilität K(m) des Filtermediums (10) und der Partikellast speichert, insbesondere der Masse m, die in dem Filtermedium (10) enthalten ist,
- Mittel (24, 26, 28, 30), um den Unterschied $\Delta P_{Filtermedium}$ der Druckwerte (28, 30) am Eingang und am Ausgang des Filtermediums (10) zu berechnen, der der Summe der beiden Komponenten ($\Delta P1$, $\Delta P2$) gleichgesetzt wird, wobei die erste ($\Delta P1$) den Lastverlust darstellt, der durch das Ausströmen der Gase am Eingang und am Ausgang des Filtermediums (10) erzeugt wird, und die zweite ($\Delta P2$) den Lastverlust darstellt, der von den Auspuffgasen beim Durchströmen des Filtermediums (10) erzeugt wird, und die Permeabilität K(m) als Variable enthält,
- Mittel (36) zur Bestimmung der Gasmenge (Qv), die durch das Filtermedium (10) strömt,
- Mittel (36) zur Berechnung des Wertes der Permeabilität K(m) des Filtermediums (10) aus den bestimmten Werten, und
- Mittel (36) zur Bestimmung des Wertes der Partikellast, die im Filtermedium (10) gespeichert ist, aus dem Wert der Permeabilität K(m) und dem im Speicher (46) gespeicherten Verhältnis.

**19.** Vorrichtung nach Anspruch 18, **dadurch gekennzeichnet, dass** sie Speichermittel (36, 38, 46) umfasst, die einen ausführbaren Code enthalten, der dazu bestimmt ist, das Verfahren nach einem der Ansprüche 1 bis 18 einzusetzen.

**20.** Motoreinheit, umfassend:

- einen Verbrennungsmotor (4),
- ein Auspuffsystem (6) für die Auspuffgase des Motors, umfassend ein Filtermedium (10),
- ein intelligentes Mittel (18), das es ermöglicht, die Regeneration des Filtermediums nach bestimmten Kriterien zu steuern,

**dadurch gekennzeichnet, dass** sie eine Vorrichtung zur Bestimmung der in einem Filtermedium (10) vorhandenen Partikellast nach einem der Ansprüche 18 oder 19 umfasst.

**Fig. 1**

**Fig. 2**

**Fig. 3**

Unité centrale stratégie commande moteur & filtre à moteur 20

Moteur 4

Centre du traitement données média filtrant

ROM 38

Microprocesseur 36

RAM 40

Mémoire tampon 44

Interface 42

22

Mémoire pré-programmable EEPROM 46

Algorithme détermination charge & gestion 48

50

Relation perméabilité ⟷ charge de particules (masse m)

Capteur amont 14

Capteur aval 16

6

10

1